# EUROPÄISCHE PATENTSCHRIFT

(11) **EP 3 593 102 B1**
(45) Veröffentlichungstag und Bekanntmachung des Hinweises auf die Patenterteilung: **12.07.2023**
(21) Anmeldenummer: 18712115.7
(22) Anmeldetag: 08.03.2018
(51) Int. Cl.: G01K 1/18, G01K 13/02, B82Y 40/00

(54) **MESSANORDNUNG UND VERFAHREN ZUM MESSEN VON EIGENSCHAFTEN EINES STRÖMENDEN MEDIUMS**
MEASUREMENT ARRANGEMENT AND METHOD FOR MEASURING PROPERTIES OF A FLOWING MEDIUM
SYSTÈME DE MESURE ET PROCÉDÉ POUR MESURER DES PROPRIÉTÉS D'UN FLUIDE EN ÉCOULEMENT

(30) Priorität: 08.03.2017 DE 102017104904
(43) Veröffentlichungstag der Anmeldung: 15.01.2020
(73) Patentinhaber: NanoWired GmbH, 64579 Gernsheim (DE)
(72) Erfinder: BIRLEM, Olav, 68642 Bürstadt (DE); SCHLAAK, Helmut F., 64283 Darmstadt (DE); QUEDNAU, Sebastian, 64283 Darmstadt (DE); ROUSTAIE, Farough, 64283 Darmstadt (DE); DASSINGER, Florian, 64283 Darmstadt (DE)
(74) Vertreter: Keenway Patentanwälte Neumann Heine Taruttis
(86) Internationale Anmeldenummer: PCT/EP2018/055839
(87) Internationale Veröffentlichungsnummer: WO 2018/162684

(56) Entgegenhaltungen:
- EP-A2- 2 450 682
- WO-A1-2013/106809
- DE-A1-102015 113 237
- KR-A- 20100 031 915
- US-A1- 2006 216 603
- ROUSTAIE FAROUGH ET AL: "In situsynthesis of metallic nanowire arrays for ionization gauge electron sources", JOURNAL OF VACUUM SCIENCE & TECHNOLOGY B: MICROELECTRONICS AND NANOMETER STRUCTURES, AMERICAN INSTITUTE OF PHYSICS, 2 HUNTINGTON QUADRANGLE, MELVILLE, NY 11747, Bd. 34, Nr. 2, 12. Januar 2016 (2016-01-12), XP012203870, ISSN: 2166-2746, DOI: 10.1116/1.4939756 [gefunden am 1901-01-01]

## Beschreibung

Die Erfindung betrifft eine Messanordnung und ein Verfahren zum Herstellen einer Messanordnung.

Es sind verschiedenste Sensoren und Messvorrichtungen bekannt, um verschiedenste Eigenschaften strömender Medien zu messen. Dies betrifft insbesondere die Messung von Temperatur, Fließgeschwindigkeit, Dichte und/oder Druck des Mediums. Um eine Beeinträchtigung eines verwendeten Sensors durch das Medium (insbesondere durch die Tatsache, dass dieses strömt) zu vermeiden, sind Vorrichtungen bekannt, bei denen der Sensor von dem Medium getrennt ist. So kann z. B. der Sensor in ein Gehäuse eingebaut sein. Dies kann aber die Genauigkeit der Messung erheblich beeinflussen. Wird beispielsweise ein Temperatursensor in ein Gehäuse eingebaut, das von außen von dem Medium umströmt wird, so hängt die Messgenauigkeit von der thermischen Leitfähigkeit des Gehäuses und der Verbindung zwischen Sensor und Gehäuse ab. In bekannten Lösungen wird der Sensor an die Innenwand des Gehäuses geklebt. Dies hat neben einer nicht optimalen thermischen Leitfähigkeit zwischen Sensor und Gehäuse den weiteren Nachteil, dass die Verbindung aufwendig herzustellen ist. Insbesondere kommt es in der erforderlichen Aushärtezeit des Klebers regelmäßig zu einem Verrutschen des Sensors. Auch kann die mechanische Stabilität der Verbindung nicht ausreichend sein.

DE 10 2015 113237 A1 und EP 2 450 682 A2 offenbaren Messeinheiten zum Messen mindestens einer Eigenschaft eines strömenden Mediums aufweisend zumindest einen Sensor, wobei der Sensor innerhalb der Messeinheit angeordnet ist, und wobei der Sensor mit einer Innenwand der Messeinheit verbunden ist. KR 2010 0031915 A offenbart die Verwendung von Nanodrähten als "Klebemittel" zum Befestigen von Halbleiterchips auf Leiterplatten. XP012203870 (Roustaie et al. 2016: "In situsynthesis of metallic nanowire arrays for ionization gauge electron sources") sowie US 2006/216603 A1 offenbaren Verfahren zur in situ Synthese von Nanodrähten mithilfe einer mit Poren versehenen Folie und galvanischer Prozesse.

Hiervon ausgehend ist es Aufgabe der hier vorliegenden Erfindung, die im Zusammenhang mit dem Stand der Technik geschilderten technischen Probleme zu lösen bzw. zumindest zu verringern. Es sollen insbesondere eine Messeinheit und eine diese enthaltende Messanordnung vorgestellt werden, mit denen eine Eigenschaft eines strömenden Mediums besonders genau bestimmt werden kann und die besonders einfach hergestellt werden können. Außerdem soll ein entsprechendes Herstellungsverfahren vorgestellt werden.

Diese Aufgaben werden gelöst mit einer Messeinheit gemäß den Merkmalen des Patentanspruchs 1, und mit einem Verfahren zum Herstellen einer Messeinheit gemäß den Merkmalen des Patentanspruchs 7. Weitere vorteilhafte Ausgestaltungen der Messeinheit, der Messanordnung und des Verfahrens sind in den jeweils abhängig formulierten Patentansprüchen angegeben.

Erfindungsgemäß wird eine Messeinheit zum Messen mindestens einer Eigenschaft eines strömenden Mediums vorgestellt. Die Messeinheit weist zumindest einen Sensor auf. Der Sensor ist innerhalb der Messeinheit angeordnet. Der Sensor ist über eine Vielzahl von Nanodrähten mit einer Innenwand der Messeinheit verbunden.

Bei dem Medium kann es sich um eine Flüssigkeit, ein Gas und/oder ein Gemisch einer Flüssigkeit und eines Gases handeln. Die Messeinheit ist dazu eingerichtet und bestimmt, Eigenschaft(en) wie z.B. Temperatur, Fließgeschwindigkeit, Dichte und/oder Druck des Mediums zu messen. Der Sensor ist entsprechend vorzugsweise ein Temperatursensor, Fließgeschwindigkeitssensor, Dichtesensor bzw. Drucksensor. Dazu wird die Messeinheit vorzugsweise zumindest teilweise von dem strömenden Medium umgeben bzw. umströmt. Das Medium kann z. B. innerhalb eines Rohres, innerhalb eines (geschlossenen oder nach oben offenen) Kanals oder auch ohne näher bestimmte Grenzen (wie z.B. bei einer natürlichen Luftströmung) strömen.

Die Messeinheit weist vorzugsweise ein Gehäuse auf, dessen Äußeres dazu eingerichtet und bestimmt ist, zumindest teilweise mit dem strömenden Medium in Kontakt gebracht zu werden (um von dem strömenden Medium umströmt zu werden). Vorzugsweise ist zumindest der mit dem Medium in Kontakt stehende Teil des Gehäuses derart abgedichtet, dass das Medium nicht eindringen kann. Das Gehäuse ist vorzugsweise mit einem Metall und/oder mit einem Kunststoff gebildet.

Der Sensor ist vorzugsweise derart innerhalb der Messeinheit angeordnet, dass die zu messende Eigenschaft des Mediums besonders gut auf den Sensor übertragen wird. Beispielsweise kann eine Temperatur des Mediums besonders gut gemessen werden, wenn der Sensor thermisch leitend mit dem Medium verbunden ist. Daher ist es bevorzugt, dass der Sensor innerhalb eines Bereichs der Messeinheit angeordnet ist, der von dem strömenden Medium umströmt wird. Außerdem ist es bevorzugt, dass das Gehäuse der Messeinheit (und damit auch die Innenwand der Messeinheit) zumindest an der Stelle des Sensors mit einem thermisch leitenden Material gebildet ist, insbesondere mit einem Metall wie z. B. Kupfer.

Der Sensor ist über die Vielzahl von Nanodrähten mit der Innenwand der Messeinheit verbunden. Unter einem Nanodraht (engl. "nanowire") wird hier jeder materielle Körper verstanden, der eine drahtähnliche Form und eine Größe im Bereich von wenigen Nanometern bis zu wenigen Mikrometern hat. Ein Nanodraht kann z.B. eine kreisförmige, ovale oder mehreckige Grundfläche aufweisen. Insbesondere kann ein Nanodraht eine hexagonale Grundfläche aufweisen. Vorzugsweise sind alle an der Verbindung beteiligten Nanodrähte aus dem gleichen Material gebildet.

Bevorzugt weisen die Nanodrähte eine Länge im Bereich von 100 nm [Nanometer] bis 100 µm [Mikrometer], insbesondere im Bereich von 500 nm bis 30 µm auf. Weiterhin weisen die Nanodrähte bevorzugt einen Durchmesser im Bereich von 10 nm bis 10 µm, insbesondere im Bereich von 30 nm bis 2 µm auf. Dabei bezieht sich der Begriff Durchmesser auf eine kreisförmige Grundfläche, wobei bei einer davon abweichenden Grundfläche eine vergleichbare Definition eines Durchmessers heranzuziehen ist. Es ist besonders bevorzugt, dass alle verwendeten Nanodrähte die gleiche Länge und den gleichen Durchmesser aufweisen.

Die Verbindung über die Nanodrähte hat den Vorteil, besonders gut thermisch leitend zu sein. Die Verbindung hat gegenüber einer Lot- oder Klebverbindungen auch den Vorteil, dass durch ihren rein metallischen Aufbau aus den Materialien wie zum Beispiel Kupfer ein höher thermischer Leitwert im Verbindungsbereich vorliegt. Durch die große Kontaktoberfläche zwischen der Vielzahl der Nanodrähte wird auch eine Verbesserung des thermischen Leitwertes erreicht. Weiterhin wird die Verbindung instantan ausgebildet, wodurch die Herstellung der beschriebenen Messeinheit besonders einfach sein kann (vgl. dazu insbesondere die Beschreibung des Herstellungsverfahrens weiter unten).

In einer bevorzugten Ausführungsform umfasst die Messeinheit zumindest einen rohrartigen Abschnitt, wobei der Sensor innerhalb des rohrartigen Abschnitts der Messeinheit angeordnet ist.

Bevorzugt ist die Messeinheit dazu eingerichtet und bestimmt, dass insbesondere der rohrartige Abschnitt von dem strömenden Medium umströmt wird. Daher ist es bevorzugt, dass der Sensor gerade innerhalb des rohrartigen Abschnitts angeordnet ist. Der rohrartige Abschnitt stellt damit also einen Fühler der Messeinheit dar, der der Aufnahme eines Messwertes dient. Die Messeinheit weist vorzugsweise weiterhin einen Auswertungsbereich auf, der an den rohrartigen Abschnitt angebunden ist. Innerhalb des Auswertungsbereichs findet bevorzugt die Auswertung der Messergebnisse statt. Dazu ist vorzugsweise eine Elektronik (umfassend z. B. eine Platine und/oder einen Computerchip) innerhalb des Auswertungsbereichs vorgesehen. Im Falle der Temperaturmessung ist insbesondere der rohrartige Abschnitt vorzugsweise mit einem thermisch leitenden Material gebildet. Dadurch kann eine besonders genaue Temperaturmessung erreicht werden.

Aus diesem Grund ist die Ausführungsform der Messeinheit besonders bevorzugt, in der der rohrartige Abschnitt der Messeinheit zumindest teilweise mit einem Metall gebildet ist.

In einer weiteren bevorzugten Ausführungsform der Messeinheit ist der Sensor ein Temperatursensor.

Bei dem Temperatursensor handelt es sich vorzugsweise um einen elektronischen Temperatursensor. Es ist besonders bevorzugt, dass der Temperatursensor eine flächige Messfläche aufweist, wobei unter Messfläche der sensitive Bereich des Temperatursensors verstanden wird, über den die Temperatur gemessen wird. Vorzugsweise ist der Temperatursensor mit der Messfläche (vorzugsweise mit der vollständigen Messfläche) mit der Innenwand der Messeinheit verbunden. Insbesondere ist es bevorzugt, dass diese Verbindung thermisch leitend ausgeführt ist.

Eine Ausführungsform der Erfindung betrifft eine Messanordnung zum Messen mindestens einer Eigenschaft eines strömenden Mediums, wobei die Messanordnung zumindest umfasst:
- ein Rohr, durch das das Medium strömen kann, und
- eine Messeinheit, die zumindest teilweise in das Rohr eingesetzt ist, und die zumindest einen Sensor aufweist, wobei der Sensor innerhalb der Messeinheit angeordnet ist, und wobei der Sensor über eine Vielzahl von Nanodrähten mit einer Innenwand der Messeinheit verbunden ist.

Die weiter oben beschriebenen besonderen Vorteile und Ausgestaltungsmerkmale der Messeinheit sind auf die beschriebene Messanordnung anwendbar und übertragbar, und umgekehrt.

Die Messeinheit ist vorzugsweise derart in das Rohr eingesetzt, dass die Messeinheit von dem strömenden Medium umströmt werden kann. Weiterhin ist vorzugsweise eine Abdichtung vorgesehen, die das Medium am Austritt aus dem Rohr insbesondere an der Stelle hindert, an der die Messeinheit in das Rohr eingesetzt ist. Dabei ist es besonders bevorzugt, dass der Teil der Messeinheit von dem strömenden Medium umströmt wird, innerhalb dessen der Sensor angeordnet ist. Der weiter oben beschriebene Auswertungsbereich der Messeinheit ist vorzugsweise außerhalb des Rohres angeordnet.

In einer bevorzugten Ausführungsform der Messanordnung ist die Messeinheit wie beschrieben ausgeführt.

In einer weiteren bevorzugten Ausführungsform der Messanordnung ist die Messeinheit wie beschrieben ausgeführt, wobei zumindest der rohrartige Abschnitt der Messeinheit in das Rohr eingesetzt ist.

Diese Ausführungsform der Messanordnung bezieht sich insbesondere auf die weiter oben beschriebenen Ausführungsformen der Messeinheit, in denen die Messeinheit zumindest einen rohrartigen Abschnitt umfasst, wobei der Sensor innerhalb des rohrartigen Abschnitts der Messeinheit angeordnet ist. Hier ist es bevorzugt, dass insbesondere der rohrartige Abschnitt der Messeinheit von dem strömenden Medium umströmt wird.

Ein weiterer Aspekt der Erfindung betrifft ein Verfahren zum Herstellen einer Messeinheit zum Messen mindestens einer Eigenschaft eines strömenden Mediums. Die Messeinheit weist zumindest einen Sensor auf, wobei der Sensor innerhalb der Messeinheit angeordnet ist, und wobei der Sensor über eine Vielzahl von Nanodrähten mit einer Innenwand der Messeinheit verbunden ist. Das Verfahren umfasst zumindest die folgenden Verfahrensschritte:
a) Bereitstellen einer Vielzahl von Nanodrähten in zumindest einem Bereich der Innenwand der Messeinheit,
b) Verbinden des Sensors mit der Innenwand der Messeinheit über die Vielzahl von Nanodrähten.

Die weiter oben beschriebenen besonderen Vorteile und Ausgestaltungsmerkmale der Messeinheit und der Messanordnung sind auf das beschriebene Verfahren anwendbar und übertragbar, und umgekehrt.

Die angegebenen Verfahrensschritte werden bevorzugt in der angegebenen Reihenfolge durchgeführt.

In Schritt a) können die Nanodrähte z. B. über galvanische Prozesse oder mittels Verfahren, die aus der Dünnschichttechnologie bekannt sind, erhalten werden. In Schritt b) wird der Sensor vorzugsweise mit den Nanodrähten in Kontakt gebracht. Dabei kann optional ein Druck auf den Sensor ausgeübt werden, mittels dem der Sensor an die Innenwand der Messeinheit gedrückt wird. Durch diesen Druck kann die Verbindung über die Nanodrähte besonders stabil ausgeprägt werden. Aufgrund der großen Kontaktoberfläche der Nanodrähte kann die Verbindung auch ohne einen solchen Druck mechanisch stabil ausgebildet werden.

In einer bevorzugten Ausführungsform des Verfahrens wird in Schritt a) zusätzlich eine Vielzahl von Nanodrähten auf einer Oberfläche des Sensors bereitgestellt.

Vorzugsweise wird die Vielzahl der Nanodrähte auf der Oberfläche des Sensors bereitgestellt, die mit der Innenwand der Messeinheit verbunden werden soll. Insbesondere ist es bevorzugt, dass diese Oberfläche vollständig mit Nanodrähten bedeckt wird. Alternativ ist es aber auch bevorzugt, nur einen Teil dieser Oberfläche mit Nanodrähten zu bedecken. Im Falle eines Temperatursensors ist es insbesondere bevorzugt, dass die weiter oben beschriebene sensitive Messfläche des Temperatursensors (insbesondere vollständig) mit Nanodrähten bedeckt wird.

In dieser Ausführungsform wird die Verbindung zwischen dem Sensor und der Innenwand der Messeinheit zwischen den Nanodrähten am Sensor und den Nanodrähten an der Innenwand der Messeinheit ausgebildet. Dadurch kann eine besonders große Kontaktoberfläche erzielt werden, wodurch die Verbindung besonders mechanisch stabil ausgeprägt sein kann. Auch kann insbesondere die thermische Leitfähigkeit der Verbindung besonders gut sein. Dies kann gerade für eine Temperaturmessung von Vorteil sein.

In einer weiteren bevorzugten Ausführungsform des Verfahrens umfasst Schritt b) zumindest die folgenden Teilverfahrensschritte:
b1) Auflegen einer Folie auf die Innenwand der Messeinheit, wobei die Folie eine Vielzahl von durchgehenden Poren aufweist, in denen die Nanodrähte gewachsen werden können,
b2) Auflegen eines Mittels zum Bereitstellen eines Elektrolyten auf die Folie, und
b3) galvanisches Wachsen der Vielzahl von Nanodrähten aus dem Elektrolyten.

Die angegebenen Teilverfahrensschritte werden vorzugsweise, aber nicht notwendigerweise, in der angegebenen Reihenfolge durchlaufen.

Das beschriebene Verfahren ist für verschiedenste Materialien der Nanodrähte anwendbar. Als Material der Nanodrähte bevorzugt sind elektrisch leitende Materialien, insbesondere Metalle wie Kupfer, Silber, Gold, Nickel, Zinn und Platin. Aber auch nichtleitende Materialien wie Metalloxide sind bevorzugt.

Die Innenwand der Messeinheit, auf die die Nanodrähte gewachsen werden sollen, ist vorzugsweise elektrisch leitend ausgeführt. Sofern die Innenwand der Messeinheit Teil eines ansonsten nicht elektrisch leitenden Körpers ist, kann die elektrische Leitfähigkeit z. B. durch eine Metallisierung erreicht werden. So kann z. B. eine nicht elektrisch leitende Innenwand der Messeinheit mit einer dünnen Schicht Metall überzogen werden. Durch die Metallisierung kann insbesondere eine Elektrodenschicht erzeugt werden. Je nach Material der Innenwand der Messeinheit und/oder der Elektrodenschicht kann es sinnvoll sein, eine Haftschicht zwischen der Innenwand der Messeinheit und der Elektrodenschicht vorzusehen, die eine Haftung zwischen der Innenwand der Messeinheit und der Elektrodenschicht vermittelt.

Es ist bevorzugt, aber nicht notwendig, dass vor Schritt b1) eine Strukturierungsschicht auf der Innenwand der Messeinheit bereitgestellt wird, die mindestens eine Auslassung aufweist an einer Stelle der Innenwand der Messeinheit, an der die Nanodrähte auf die Innenwand der Messeinheit gewachsen werden sollen. Mit der Strukturierungsschicht kann also das Wachstum der Nanodrähte lokal begrenzt werden. Bei der Strukturierungsschicht handelt es sich vorzugsweise um eine Schicht aus einem nicht elektrisch leitenden Material. Die Strukturierungsschicht kann entweder vor Schritt b1) auf die Innenwand der Messeinheit aufgebracht werden oder es kann eine Messeinheit mit bereits auf der Innenwand befindlicher Strukturierungsschicht bereitgestellt werden.

Die Strukturierungsschicht ist bevorzugt als eine Laminierschicht ausgebildet. Dabei meint Laminierschicht, dass die Strukturierungsschicht durch Erwärmen eines Kunststoffmaterials (insbesondere eines Polymermaterials) auf die Innenwand der Messeinheit aufgebracht wird.

Als Alternative zum Laminierungsverfahren kann die Strukturierungsschicht durch einen Fotolack erzeugt werden, der durch einen Lithographie-Prozess (Belichten mit einer Maske) mit der entsprechenden Strukturierung versehen wird und nach dem Entwickeln dann die Auslassungen freigibt auf denen dann die Nanodrähte gemäß Schritt b3) gewachsen werden.

Durch die Wahl der Anzahl, Position, Größe und Gestalt der mindestens einen Auslassung in der Strukturierungsschicht kann gesteuert werden, in welchen Bereichen der Innenwand der Messeinheit die Nanodrähte gewachsen werden sollen. Dies ist insbesondere dadurch möglich, dass die Strukturierungsschicht nicht elektrisch leitend ausgeführt ist, so dass eine galvanische Abscheidung (und damit ein galvanisches Wachstum der Nanodrähte) auf das Strukturierungsschichtmaterial nicht möglich ist. Dabei weist jede Auslassung vorzugsweise eine Ausdehnung auf, die groß ist im Vergleich zu einem mittleren Durchmesser der Nanodrähte und zu einem mittleren Abstand zwischen benachbarten Nanodrähten. Das bedeutet insbesondere, dass innerhalb jeder Auslassung jeweils eine Vielzahl von Nanodrähten gewachsen werden kann.

Die Folie ist vorzugsweise mit einem Kunststoffmaterial, insbesondere mit einem Polymermaterial gebildet. Insbesondere ist es bevorzugt, dass die Folie derart mit der Innenwand der Messeinheit verbunden wird, dass die Folie nicht verrutscht. Dies könnte die Qualität der gewachsenen Nanodrähte mindern.

Dass die Poren der Folie durchgehend ausgeführt sind, ist vorzugsweise derart realisiert, dass die Poren von einer Oberseite der Folie zu einer Unterseite der Folie durchgehende Kanäle ausbilden. Insbesondere ist es bevorzugt, dass die Poren zylinderförmig ausgeführt sind. Es ist aber auch möglich, dass die Poren als Kanäle mit gekrümmtem Verlauf ausgeführt sind. Eine Pore kann z.B. eine kreisförmige, ovale oder mehreckige Grundfläche aufweisen. Insbesondere kann eine Pore eine hexagonale Grundfläche aufweisen. Vorzugsweise sind die Poren gleichmäßig ausgeführt (d.h. die Poren unterscheiden sich vorzugsweise nicht hinsichtlich der Größe, Form, Anordnung und/oder Abstand zu benachbarten Poren).

Werden die Nanodrähte in Schritt b3) gewachsen, so werden die Poren vorzugsweise (insbesondere vollständig) mit dem galvanisch abgeschiedenen Material gefüllt. Dadurch erhalten die Nanodrähte die Größe, Form und Anordnung der Poren. Durch Wahl der Folie bzw. der Poren darin können also die Eigenschaften der zu wachsenden Nanodrähte festgelegt bzw. beeinflusst werden. Die Folie kann daher auch als "Template", "Templatefolie" oder "Schablone" bezeichnet werden.

Wird eine Strukturierungsschicht verwendet, ist es bevorzugt, dass die Folie in Schritt b1) derart auf die Strukturierungsschicht aufgelegt wird, dass die Folie zumindest teilweise die mindestens eine Auslassung in der Strukturierungsschicht überdeckt. Dadurch kann sichergestellt werden, dass zumindest in diesem Bereich der Überlappung ein Wachstum der Nanodrähte stattfinden kann. Weiterhin ist es bevorzugt, dass die Folie zumindest teilweise auch die Strukturierungsschicht in einem Bereich überdeckt, in dem die Strukturierungsschicht keine Auslassung aufweist. Dadurch kann sichergestellt werden, dass die Folie in ihrer Position fixiert ist.

Bei dem Mittel zum Bereitstellen des Elektrolyten kann es sich um jede Vorrichtung handeln, die dazu eingerichtet und bestimmt ist, einen Elektrolyten zumindest an einer Ausgabestelle abzugeben. Vorzugsweise ist die Ausgabestelle flächig ausgeführt, wobei besonders bevorzugt ist, dass der Elektrolyt über eine Ausgabefläche gleichmäßig ausgegeben werden kann. Weiterhin ist es bevorzugt, dass das Mittel zum Bereitstellen des Elektrolyten die Folie vollständig überdeckt. Beispielsweise kann es sich bei dem Mittel zum Bereitstellen des Elektrolyten um einen Schwamm, ein Tuch, einen porösen festen Körper oder aber auch um eine Einspritzeinrichtung mit einer oder mehreren Düsen handeln. Das Mittel zum Bereitstellen des Elektrolyten ist bevorzugt derart ausgeführt, dass es zusätzlich eine Fixierung der Folie bewirken kann. Das kann insbesondere dadurch realisiert sein, dass das Mittel zum Bereitstellen des Elektrolyten flächig ausgeführt ist und zum Anpressen der Folie an die Innenwand der Messeinheit bestimmt und eingerichtet ist.

Gemäß der Schritte b1) bis b3) entsteht vorzugsweise ein Schichtaufbau aus zumindest den drei Schichten: Innenwand der Messeinheit, Folie und Mittel zum Bereitstellen des Elektrolyten (die in der hier genannten Reihenfolge angeordnet sind). Dieser Schichtaufbau kann in jeder beliebigen räumlichen Orientierung verwendet werden. Bevorzugt ist jedoch eine Orientierung, bei der die Innenwand der Messeinheit unten und das Mittel zum Bereitstellen des Elektrolyten oben angeordnet sind.

In Schritt b3) erfolgt schließlich unter Verwendung des beschriebenen Schichtaufbaus das Wachstum der Nanodrähte. Dabei kann insbesondere über die folgenden Parameter die Qualität der Nanodrähte beeinflusst werden:
- eine angelegte Spannung,
- eine vorliegende Stromdichte,
- ein zeitlicher Verlauf der Stromdichte und/oder der Spannung,
- ein Druck des Elektrolyten auf die Innenwand der Messeinheit,
- eine Zusammensetzung des Elektrolyten,
- ein Anpressdruck der Folie auf die Innenwand der Messeinheit, insbesondere durch Anpressen des Mittels zum Bereitstellen des Elektrolyten,
- ein zeitlicher Verlauf des Anpressdruckes der Folie,
- eine bei dem Verfahren vorliegende Temperatur,
- ein bei dem Verfahren verwendeter zeitlicher Temperaturverlauf, und
- eine Strömung bzw. Bewegung des Elektrolyten.

Bei der angelegten Spannung handelt es ich um eine zwischen Elektroden für das galvanische Wachstum angelegte Spannung. Bei der Stromdichte handelt es sich um den auf die zu bewachsende Fläche bezogenen Strom (Strom / Rasenfläche).

Insbesondere können diese Parameter auch mit der Zeit verändert werden. Je nach verwendetem Material, Größe, Form, Dichte (d.h. mittlerem Abstand zwischen benachbarten Nanodrähten) und Anordnung der Nanodrähte können die optimalen Parameter variieren. Insbesondere eine zeitliche Veränderung der Stromdichte kann die Nanodrahtherstellung verbessern.

Bevorzugt wird das Verfahren für Kupfer bei Raumtemperatur durchgeführt. Die angelegte Spannung liegt bevorzugt zwischen 0,01 V und 2 V [Volt], insbesondere bei 0,2 V. Als die Galvanik für Kupfer ist insbesondere eine Mischung aus Cu-SO₄ [Kupfersulfat], H₂SO₄ [Schwefelsäure] und H₂O [Wasser] bevorzugt. Um unter diesen Bedingungen beispielsweise Nanodrähte aus Kupfer mit einem Durchmesser von 100 nm [Nanometer] und einer Länge von 10 µm [Mikrometer] zu erhalten, wird bevorzugt eine Stromdichte von 1,5 mA/cm² [Milliampere pro Quadratzentimeter] (Gleichstrom) über eine Wachstumsdauer von 20 Minuten verwendet. Um beispielsweise Nanodrähte aus Kupfer mit einem Durchmesser von 1 µm [Mikrometer] und einer Länge von 10 µm [Mikrometer] zu erhalten, wird bevorzugt eine Stromdichte von 0,5-2 mA/cm² [Milliampere pro Quadratzentimeter] (Gleichstrom) über eine Wachstumsdauer von 40 Minuten verwendet.

Vorzugsweise wird nach Abschluss des Wachstums der Nanodrähte in Schritt b3) die Folie zumindest teilweise (besonders bevorzugt vollständig) entfernt. Damit können die Nanodrähte freigelegt werden, so dass sie zur weiteren Verwendung (d.h. insbesondere zum Ausbilden der Verbindung zwischen Sensor und Innenwand der Messeinheit) zur Verfügung stehen. Das Entfernen der Folie erfolgt vorzugsweise thermisch und/oder chemisch (z. B. mittels einer Lauge oder eines organischen Lösungsmittels) oder mittels Sauerstoffplasma.

In einer Ausführungsform ist es bevorzugt, dass zwei oder mehr Folien verwendet werden. Durch Aneinanderlegen mehrerer Folien können insbesondere Nanodrähte mit einer besonders großen Länge und/oder mit einer variablen geometrischen Form erhalten werden. Ebenfalls ist durch das Aneinanderlegen mehrerer Folien ein Prozessschritt möglich, bei dem durch Abziehen der äußersten Folie alle Nanodrähte auf eine gemeinsame Länge, die sich insbesondere aus der Dicke der an der Innenwand der Messeinheit anliegenden Folie ergibt, gekürzt werden.

Mit dem beschriebenen Verfahren, insbesondere unter Verwendung der als bevorzugt beschriebenen Parameter, können Nanodrähte besonders hoher Qualität erhalten werden. Auch können diese über eine besonders große Fläche besonders gleichmäßig hinsichtlich Länge, Durchmesser, Struktur, Dichte (d.h. mittleren Abstands zwischen benachbarten Nanodrähten) und Materialzusammensetzung gewachsen werden. Auch ist das beschriebene Verfahren nicht auf den Einsatz in einem Labor beschränkt, da es insbesondere ohne Mikromontage-Handhabung auskommt. Verfahren, die beispielswiese mit Schwerionen-Beschuss arbeiten, sind auf eine Forschungseinrichtung beschränkt, da ein Ionenbeschleuniger eine feststehende Großanlage ist.

In einer weiteren bevorzugten Ausführungsform findet das Verfahren zumindest teilweise unter Erwärmung statt.

Die Erwärmung findet vorzugsweise in Schritt b3) statt. Dabei werden bevorzugt die in der folgenden Tabelle für die verschiedenen Materialien der Nanodrähte angegebenen bevorzugten beziehungsweise besonders bevorzugten Temperaturen verwendet.

| Material der Nanodrähte | Bevorzugte Temperatur | besonders bevorzugte Temperatur |
|---|---|---|
| Kupfer | 13°...43° | 18°...28° |
| Silber | 50°...70° | 55°...65° |
| Platin | 50°... 70° | 55°...65° |
| Gold | 50°...70° | 55°...65° |
| Nickel | 35°...55° | 40°...50° |
| Zinn | 13°...43° | 18°...28° |

Durch eine erhöhte Temperatur kann die Mobilität der Ionen im Elektrolyten erhöht werden. Damit kann das Wachstum der Nanodrähte begünstigt werden.

In einer weiteren bevorzugten Ausführungsform des Verfahrens wird der Elektrolyt dem Mittel zum Bereitstellen des Elektrolyten nach Bedarf zugeführt.

Der Elektrolyt wird dem Mittel zum Bereitstellen des Elektrolyten vorzugsweise über ein Rohr zugeführt. Der Bedarf an dem Elektrolyten ergibt sich insbesondere aus dem Verbrauch durch die galvanische Abscheidung. Steht am Ort des Wachstums der Nanodrähte zu wenig Elektrolyt zur Verfügung, so können sich Fehlstellen innerhalb der Nanodrähte bilden bzw. es können Bereiche entstehen, in denen keine Nanodrähte vorhanden sind. Weiterhin kann bei einem ungleichmäßig verteilten Elektrolyten, bei einer ungleichmäßigen Ionenkonzentration des Elektrolyten und/oder bei einer ungleichmäßigen Temperatur des Elektrolyten eine ungleichmäßige Wachstumsrate auftreten. Eine ungleichmäßige Wachstumsrate kann dazu führen, dass die Nanodrähte ungleichmäßig wachsen. Wird die zugeführte Menge des Elektrolyten also genau an den Verbrauch angepasst, können Nanodrähte besonders hoher Qualität und Homogenität erhalten werden. Insbesondere kann auch auf eine Abdichtung z. B. einer Elektrolysezelle (in der das Verfahren beispielsweise durchgeführt werden kann) verzichtet werden, wenn der Elektrolyt nicht derart überschüssig vorhanden ist, dass dieser unkontrolliert aus dem Mittel zum Bereitstellen des Elektrolyten austritt.

In einer weiteren bevorzugten Ausführungsform des Verfahrens wird das Mittel zum Bereitstellen des Elektrolyten zumindest zeitweise an die Folie gepresst.

Bevorzugt findet das Anpressen des Mittels zum Bereitstellen des Elektrolyten an die Folie während Schritt b3) statt. Dies kann insbesondere während des gesamten Schritts b3) erfolgen, bevorzugt jedoch nur in einer Anfangsphase des Nanodraht-Wachstums. Auch ein Anpressen bereits in Schritt b3) ist bevorzugt. Durch das Anpressen des Mittels zum Bereitstellen des Elektrolyten an die Folie kann das Bereitstellen des Elektrolyten erleichtert werden. Beispielsweise kann der Elektrolyt aus einem Schwamm durch Pressen dieses Schwamms zum Austreten angeregt werden. Vorzugsweise ist zum Anpressen eine Feder vorgesehen, wobei die Kraft, mit der die Feder das Mittel zum Bereitstellen des Elektrolyten an die Folie presst, einstellbar ist. Auch können elastische oder plastische Elemente, motorische, hydraulische und/oder pneumatische Verstell-Einheiten oder Hebelmechanismen zum Erzeugen der Anpresskraft verwendet werden. Durch Einstellen der Kraft kann die ausgegebene Menge an Elektrolyt kontrolliert werden. Weiterhin kann durch das Anpressen der Folie auf die Innenwand der Messeinheit beziehungsweise auf die Strukturierungsschicht sichergestellt werden, dass die Folie formschlüssig, ortsfest und frei von Lufteinschlüssen (zwischen der Folie und der Innenwand der Messeinheit beziehungsweise Strukturierungsschicht sowie in den Kanälen innerhalb der Folie) gehalten wird. Eine besonders gleichmäßige Elektrolytverteilung kann auch durch Bewegen des Mittels zum Bereitstellen des Elektrolyten während des Verfahrens sichergestellt werden. Die Bewegung kann dabei beispielsweise rotatorisch, horizontal und/oder vertikal erfolgen. Insbesondere ist es bevorzugt, dass das Mittel zum Bereitstellen des Elektrolyten mit einem zeitlich veränderlichen Druck an die Folie gepresst wird oder nach einer ersten Wachstumsphase von der Folie abgehoben wird und so ein optionales Verschließen von einzelnen Poren verhindert wird.

In einer weiteren bevorzugten Ausführungsform wird kontinuierlich frischer Elektrolyt dem Mittel zum Bereitstellen zugeführt und gleichzeitig überschüssiger Elektrolyt abgeführt. Dadurch wird eine Strömung des Elektrolyts erzwungen, die eine ausreichende Ionenzufuhr gewährleistet. Die Strömung kann auch durch Zirkulieren des Elektrolyts erreicht werden.

In einer weiteren bevorzugten Ausführungsform wird der Anpressdruck mit einem Messmittel überwacht und geregelt. Die Regelung kann insbesondere mit einem Regelglied erfolgen. Durch die Regelung kann insbesondere der Anpressdruck über die (vorzugsweise gesamte) Prozesszeit bestmöglich entsprechend vorgebbarer Werte eingestellt werden.

In einer weiteren bevorzugten Ausführungsform des Verfahrens ist das Mittel zum Bereitstellen des Elektrolyten schwammartig ausgeführt.

Unter einer schwammartigen Ausführung ist zu verstehen, dass das Mittel zum Bereitstellen des Elektrolyten dazu eingerichtet ist, den Elektrolyten zunächst aufzunehmen (insbesondere aufzusaugen), zu speichern und bei Bedarf (insbesondere unter Druck) wieder abzugeben. Als ein schwammartig ausgeführtes Mittel zum Bereitstellen des Elektrolyten sind bevorzugt:
- ein Schwamm (z. B. aus einem Schaumstoffmaterial, vorzugsweise einem Melaminschaum und/oder Teflonschaum),
- ein Tuch (z. B. aus Mikrofaser, Filterpapier, Baumwolle und/oder einem anderen Stoff) und
- ein poröser fester Körper (wie z. B. ein poröser Stein, ein poröses Glas und/oder ein Keramikschaum).

Besonders bevorzugt ist das Mittel zum Bereitstellen des Elektrolyten flexibel ausgeführt. Damit kann erreicht werden, dass das Mittel zum Bereitstellen des Elektrolyten den Elektrolyten unter Druck besonders gut abgeben kann. Auf diese Weise kann sichergestellt werden, dass jede Pore der Folie mit einer ausreichenden Menge des Elektrolyten versorgt wird. Auch kann ein solches Mittel zum Bereitstellen des Elektrolyten besonders gut an die Folie angepresst werden. Auch kann so eine Beschädigung der Folie verhindert werden.

In einer weiteren bevorzugten Ausführungsform des Verfahrens sind die durchgehenden Poren der Folie senkrecht zu der Innenwand der Messeinheit ausgeführt.

In dieser Ausführungsform können die Nanodrähte senkrecht zu der Innenwand der Messeinheit gewachsen werden. Dies ist für viele Anwendungen sinnvoll.

In einer weiteren bevorzugten Ausführungsform des Verfahrens wird zum galvanischen Wachsen der Vielzahl von Nanodrähten eine Spannung zwischen der zu bewachsenden Innenwand der Messeinheit und einer an dem Mittel zum Bereitstellen des Elektrolyten anliegenden Elektrode angelegt.

Als eine Elektrode kommt hier die elektrisch leitende Innenwand der Messeinheit (ggf. unter Berücksichtigung der weiter oben bereits beschriebenen Möglichkeit einer insbesondere durch Metallisierung erhaltbaren Elektrodenschicht) in Betracht. Die Elektrodenschicht ist bevorzugt durchgängig und geschlossen auf der Innenwand der Messeinheit ausgeprägt. Vorteilhafter weise werden für die Elektrodenschicht wahlweise Kupfer, Gold, Silber und/oder Aluminium verwendet. Wird die Innenwand der Messeinheit als eine Elektrode für das Wachstum der Nanodrähte verwendet, kann so ein homogenes elektrisches Feld über der gesamten Innenwand der Messeinheit erzeugt werden. Eine zweite Elektrode ist vorzugsweise flächig ausgeführt, insbesondere derart, dass die zweite Elektrode das Mittel zum Bereitstellen des Elektrolyten zumindest teilweise (vorzugsweise vollständig) überdeckt. In dem Fall stellt die zweite Elektrode eine siebte Schicht in dem weiter oben beschriebenen Schichtaufbau dar: Innenwand der Messeinheit, Haftschicht, Elektrodenschicht, Strukturierungsschicht, Folie, Mittel zum Bereitstellen des Elektrolyten und zweite Elektrode. Die Innenwand der Messeinheit oder die Elektrodenschicht stellt dabei eine erste Elektrode dar.

In einer weiteren bevorzugten Ausführungsform des Verfahrens wird die Folie zumindest teilweise aufgelöst.

Vorzugsweise findet das Auflösen der Folie am Ende des Verfahrens statt, d.h. insbesondere nach Schritt b3). Das Entfernen der Folie ist allgemein vorteilhaft, weil erst durch das Entfernen der Folie die Nanodrähte freigelegt werden. Bevorzugt wird die Folie vollständig aufgelöst. Damit können für eine spätere Verwendung der Nanodrähte ungewünschte Rückstände der Folie vermieden werden. Die Folie kann thermisch und/oder chemisch entfernt werden. Zum chemischen Entfernen ist es bevorzugt, die Folie einem (insbesondere organischen) Lösungsmittel, einer Lauge und/oder einem Plasma auszusetzen.

Die so hergestellten Nanodrähte können auch einer weiteren Behandlung unterzogen werden. So wird vorteilhafterweise durch eine Verwendung eines reduzierenden Mediums eine potentiell vorhandene Oxidschicht auf den Nanodrähten entfernt. Einer Entfernung einer Oxidschicht kann mittels Ameisensäure und/oder mittels Ultraschall erfolgen. Ein reduzierendes Medium kann auch eine Adhäsion (Verschmelzen der Nanodrähte zu einem im wesentlichen geschlossenen Gefüge) zusätzlich unterstützen, was zu einer Erhöhung der Festigkeit der Verbindung führen kann. Bei dem Medium kann es sich um ein flüssiges oder gasförmiges Medien handeln, welches die verbundenen Nanodrähte durchströmt und so die Oxidschicht entfernt und das Verschmelzen der Nanodrähte unterstützt. Vorzugsweise wird hierzu beispielsweise Ameisensäure verwendet.

Die Erfindung und das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen schematisch:
- Fig. 1:: eine Querschnittsansicht einer Anordnung zur Durchführung des beschriebenen Verfahrens,
- Fig. 2:: eine Schnittansicht von oben durch die Strukturierungsschicht der Anordnung aus Fig. 1, und
- Fig. 3:: eine Messanordnung mit einer Messeinheit.

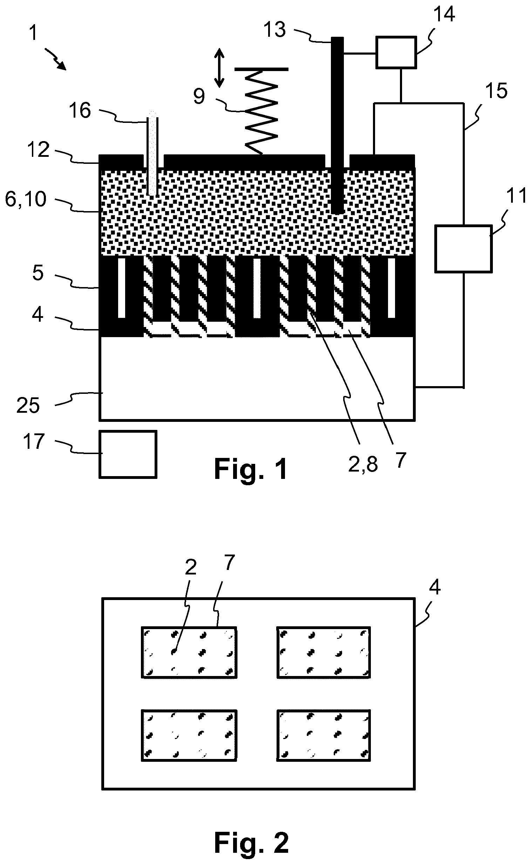

Fig. 1 zeigt eine Anordnung 1 zum Bereitstellen einer Vielzahl von Nanodrähten 2. Die Anordnung 1 umfasst eine Innenwand 25 einer (hier nicht weiter gezeigten) Messeinheit, auf die die Nanodrähte 2 gewachsen werden sollen. Auf die Innenwand 25 der Messeinheit ist eine Strukturierungsschicht 4 aufgelegt, wobei die Strukturierungsschicht 4 mehrere Auslassungen 7 aufweist (in dieser Darstellung sind zwei Auslassungen 7 zu erkennen). An den Stellen der Auslassungen 7 sollen die Nanodrähte 2 auf die Innenwand 25 der Messeinheit gewachsen werden. Weiterhin ist eine auf die Strukturierungsschicht 4 aufgelegte Folie 5 vorgesehen. Die Folie 5 weist eine Vielzahl von durchgehenden Poren 8 auf, in denen die Nanodrähte 2 gewachsen werden können. Nanodrähte 2 wachsen lediglich in den Poren 8 an den Stellen der Auslassungen 7 der Strukturierungsschicht 4. An den anderen Stellen ist ein galvanisches Wachsen der Nanodrähte 2 unterbunden. Auf die Folie 5 ist ein Schwamm 10 als ein Mittel zum Bereitstellen eines Elektrolyten 6 aufgelegt. Weiterhin ist eine Elektrode 12 vorgesehen, die an dem Schwamm 10 anliegt. Zwischen der Elektrode 12 und der Innenwand 25 der Messeinheit, die elektrisch leitend ist, kann mittels einer Spannungsquelle 11 und über Kabel 15 eine Spannung angelegt werden. Mit dieser Spannung kann das galvanische Wachsen der Vielzahl von Nanodrähten 2 realisiert werden. Weiterhin ist eine Referenzelektrode 13 vorgesehen. Zwischen der Referenzelektrode 13 und der Elektrode 12 kann mit einem Messgerät 14 eine elektrische Potentialdifferenz gemessen werden. Über ein Elektrolytrohr 16 kann der Elektrolyt dem Schwamm 10 zugeführt werden. Der Schwamm 10 kann mittels einer Feder 9 an die Folie 5 gepresst werden. Dabei ist die Feder 9 derart befestigt, dass eine auf den Schwamm 10 einwirkende Kraft einstellbar ist. Dies ist durch den Doppelpfeil angedeutet. Weiterhin eingezeichnet ist eine Heizung 17, mittels derer das Wachstum der Nanodrähte 2 (vollständig oder nur zeitweise) unter Erwärmung stattfinden kann und/oder mittels derer die Folie 5 (zumindest teilweise) aufgelöst werden kann.

Fig. 2 zeigt die Strukturierungsschicht 4 aus Fig. 1 als eine Schnittansicht von oben. Zu erkennen sind hier die Auslassungen 7 mit den Nanodrähten 2, die nur an den Stellen der Auslassungen 7 wachsen können. Die Nanodrähte 2 haben einen kreisförmigen Querschnitt.

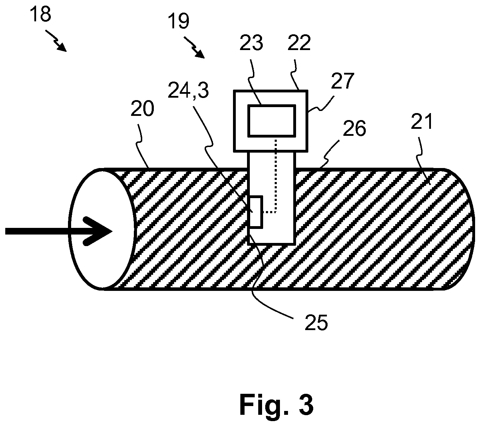

Fig. 3 zeigt eine Messanordnung 18 umfassend ein Rohr 20, durch das ein Medium 21 strömen kann. Dies ist durch einen Pfeil angedeutet. In das Rohr 20 ist eine Messeinheit 19 eingesetzt. Die Messeinheit 19 weist ein Gehäuse 22 auf. Weiterhin weist die Messeinheit 19 einen rohrartigen Abschnitt 26 und einen Auswertungsbereich 27 auf. Innerhalb des Auswertungsbereichs 27 ist eine Elektronik 23 angeordnet. Innerhalb des rohrartigen Abschnitts 26 ist ein Sensor 24 angeordnet, der als ein Temperatursensor 3 ausgeführt ist. Der Sensor 24 ist mit einer Innenwand 25 der Messeinheit 19 verbunden. Die Verbindung des Sensors 24 mit der Innenwand 25 der Messeinheit 19 ist über eine Vielzahl von (hier nicht gezeigten) Nanodrähten ausgebildet.

### Bezugszeichenliste

- 1: Anordnung
- 2: Nanodraht
- 3: Temperatursensor
- 4: Strukturierungsschicht
- 5: Folie
- 6: Mittel zum Bereitstellen eines Elektrolyten
- 7: Auslassung
- 8: Pore
- 9: Feder
- 10: Schwamm
- 11: Spannungsquelle / Stromquelle
- 12: Elektrode (Gegenelektrode)
- 13: Referenzelektrode
- 14: Messgerät
- 15: Kabel
- 16: Elektrolytrohr
- 17: Heizung
- 18: Messanordnung
- 19: Messeinheit
- 20: Rohr
- 21: Medium
- 22: Gehäuse
- 23: Elektronik
- 24: Sensor
- 25: Innenwand
- 26: rohrartiger Abschnitt
- 27: Auswertungsbereich

## Patentansprüche

1. Messeinheit (19) zum Messen mindestens einer Eigenschaft eines strömenden Mediums (21) aufweisend zumindest einen Sensor (24), wobei der Sensor (24) innerhalb der Messeinheit (19) angeordnet ist, **dadurch gekennzeichnet, dass** der Sensor (24) über eine Vielzahl von Nanodrähten (2) mit einer Innenwand (25) der Messeinheit (19) verbunden ist.

2. Messeinheit (19) nach Anspruch 1, wobei die Messeinheit (19) zumindest einen rohrartigen Abschnitt (26) umfasst, und wobei der Sensor (24) innerhalb des rohrartigen Abschnitts (26) der Messeinheit (19) angeordnet ist.

3. Messeinheit (19) nach Anspruch 2, wobei der rohrartige Abschnitt (26) der Messeinheit (19) zumindest teilweise mit einem Metall gebildet ist.

4. Messeinheit (19) nach einem der vorherigen Ansprüche, wobei der Sensor (24) ein Temperatursensor (3) ist.

5. Messanordnung (18) zum Messen mindestens einer Eigenschaft eines strömenden Mediums (21), wobei die Messanordnung (18) zumindest umfasst:
- ein Rohr (20), durch das das Medium (21) strömen kann, und
- eine Messeinheit (19), die zumindest teilweise in das Rohr (20) eingesetzt ist, und die nach einem der vorstehenden Ansprüche ausgebildet ist.

6. Messanordnung (18) nach Anspruch 5, wobei die Messeinheit (19) nach einem der Ansprüche 2 oder 3 ausgeführt ist, und wobei zumindest der rohrartige Abschnitt (26) der Messeinheit (19) in das Rohr (20) eingesetzt ist.

7. Verfahren zum Herstellen einer Messeinheit (19) zum Messen mindestens einer Eigenschaft eines strömenden Mediums (21), wobei die Messeinheit (19) zumindest einen Sensor (24) aufweist, wobei der Sensor (24) innerhalb der Messeinheit (19) angeordnet ist, wobei der Sensor (24) über eine Vielzahl von Nanodrähten (2) mit einer Innenwand (25) der Messeinheit (19) verbunden ist, **dadurch gekennzeichnet, dass** das Verfahren zumindest die folgenden Verfahrensschritte umfasst:
a) Bereitstellen einer Vielzahl von Nanodrähten (2) in zumindest einem Bereich der Innenwand (25) der Messeinheit (19),
b) Verbinden des Sensors (24) mit der Innenwand (25) der Messeinheit (19) über die Vielzahl von Nanodrähten (2).

8. Verfahren nach Anspruch 7, wobei in Schritt a) zusätzlich eine Vielzahl von Nanodrähten (2) auf einer Oberfläche des Sensors (24) bereitgestellt wird.

9. Verfahren nach einem der Ansprüche 7 oder 8, wobei Schritt b) zumindest die folgenden Teilverfahrensschritte umfasst:
b1) Auflegen einer Folie (5) auf die Innenwand (25) der Messeinheit (19), wobei die Folie (5) eine Vielzahl von durchgehenden Poren (8) aufweist, in denen die Nanodrähte (2) gewachsen werden können,
b2) Auflegen eines Mittels zum Bereitstellen eines Elektrolyten (6) auf die Folie (5), und
b3) galvanisches Wachsen der Vielzahl von Nanodrähten (2) aus dem Elektrolyten.

10. Verfahren nach Anspruch 9, wobei das Verfahren zumindest teilweise unter Erwärmung stattfindet.

11. Verfahren nach einem der Ansprüche 9 oder 10, wobei der Elektrolyt dem Mittel zum Bereitstellen des Elektrolyten (6) nach Bedarf zugeführt wird.

12. Verfahren nach einem der Ansprüche 9 bis 11, wobei das Mittel zum Bereitstellen des Elektrolyten (6) zumindest zeitweise an die Folie (5) gepresst wird.

13. Verfahren nach einem der Ansprüche 9 bis 12, wobei das Mittel zum Bereitstellen des Elektrolyten (6) schwammartig ausgeführt ist.

14. Verfahren nach einem der Ansprüche 9 bis 13, wobei die durchgehenden Poren (8) der Folie senkrecht zu der Innenwand (25) der Messeinheit (19) ausgeführt sind.

15. Verfahren nach einem der Ansprüche 9 bis 14, wobei zum galvanischen Wachsen der Vielzahl von Nanodrähten (2) eine Spannung zwischen der zu bewachsenden Innenwand (25) der Messeinheit (19) und einer an dem Mittel zum Bereitstellen des Elektrolyten (6) anliegenden Elektrode (12) angelegt wird.

16. Verfahren nach einem der Ansprüche 9 bis 15, wobei die Folie (5) zumindest teilweise aufgelöst wird.

17. Verfahren nach einem der Ansprüche 9 bis 16, wobei die Nanodrähte wenigstens einer weiteren Behandlung unterzogen werden.

18. Verfahren nach Anspruch 17, wobei die wenigstens eine weitere Behandlung eine zumindest teilweise Entfernung einer Oxidschicht auf den Nanodrähten umfasst.

## Claims

1. Measuring unit (19) for measuring at least one property of a flowing medium (21), having at least one sensor (24), the sensor (24) being arranged within the measuring unit (19), **characterized in that** the sensor (24) is connected to an inner wall (25) of the measuring unit (19) via a multiplicity of nanowires (2).

2. Measuring unit (19) according to Claim 1, wherein the measuring unit (19) comprises at least one tubular portion (26), and wherein the sensor (24) is arranged within the tubular portion (26) of the measuring unit (19).

3. Measuring unit (19) according to Claim 2, wherein the tubular portion (26) of the measuring unit (19) is at least partly formed with a metal.

4. Measuring unit (19) according to one of the preceding claims, wherein the sensor (24) is a temperature sensor (3).

5. Measurement arrangement (18) for measuring at least one property of a flowing medium (21), wherein the measurement arrangement (18) comprises at least:
- a tube (20) through which the medium (21) can flow, and
- a measuring unit (19), which is at least partly inserted into the tube (20) and which is formed according to one of the preceding claims.

6. Measurement arrangement (18) according to Claim 5, wherein the measuring unit (19) is designed according to either of Claims 2 and 3, and wherein at least the tubular portion (26) of the measuring unit (19) is inserted into the tube (20).

7. Method for producing a measuring unit (19) for measuring at least one property of a flowing medium (21), wherein the measuring unit (19) has at least one sensor (24), the sensor (24) being arranged within the measuring unit (19), wherein the sensor (24) is connected to an inner wall (25) of the measuring unit (19) via a multiplicity of nanowires (2), **characterized in that** the method comprises at least the following method steps:
a) providing a multiplicity of nanowires (2) in at least one area of the inner wall (25) of the measuring unit (19),
b) connecting the sensor (24) to the inner wall (25) of the measuring unit (19) via the multiplicity of nanowires (2).

8. Method according to Claim 7, wherein in step a) a multiplicity of nanowires (2) is additionally provided on a surface of the sensor (24).

9. Method according to either of Claims 7 and 8, wherein step b) comprises at least the following partial method steps:
b1) placing a film (5) on the inner wall (25) of the measuring unit (19), the film (5) having a multiplicity of continuous pores (8), in which the nanowires (2) can be grown,
b2) placing a means for providing an electrolyte (6) on the film (5), and
b3) growing the multiplicity of nanowires (2) galvanically from the electrolyte.

10. Method according to Claim 9, wherein the method takes place at least partly with heating.

11. Method according to either of Claims 9 and 10, wherein the electrolyte is supplied to the means for providing the electrolyte (6) as needed.

12. Method according to one of Claims 9 to 11, wherein the means for providing the electrolyte (6) is at least temporarily pressed onto the film (5).

13. Method according to one of Claims 9 to 12, wherein the means for providing the electrolyte (6) is designed in the manner of a sponge.

14. Method according to one of Claims 9 to 13, wherein the continuous pores (8) of the film are perpendicular to the inner wall (25) of the measuring unit (19).

15. Method according to one of Claims 9 to 14, wherein to produce the galvanic growth of the multiplicity of nanowires (2), a voltage is applied between the inner wall (25) of the measuring unit (19) on which growth is to take place and an electrode (12) resting on the means for providing the electrolyte (6).

16. Method according to one of Claims 9 to 15, wherein the film (5) is at least partly dissolved.

17. Method according to one of Claims 9 to 16, wherein the nanowires are subjected to at least one further treatment.

18. Method according to Claim 17, wherein the at least one further treatment comprises at least partial removal of an oxide layer on the nanowires.

## Revendications

1. Unité de mesure (19) pour mesurer au moins une propriété d'un milieu en écoulement (21), présentant au moins un capteur (24), le capteur (24) étant agencé à l'intérieur de l'unité de mesure (19), **caractérisée en ce que** le capteur (24) est relié à une paroi intérieure (25) de l'unité de mesure (19) par l'intermédiaire d'une pluralité de nanofils (2).

2. Unité de mesure (19) selon la revendication 1, dans laquelle l'unité de mesure (19) comprend au moins une section tubulaire (26), et dans laquelle le capteur (24) est agencé à l'intérieur de la section tubulaire (26) de l'unité de mesure (19).

3. Unité de mesure (19) selon la revendication 2, dans laquelle la section tubulaire (26) de l'unité de mesure (19) est au moins partiellement formée avec un métal.

4. Unité de mesure (19) selon l'une quelconque des revendications précédentes, dans laquelle le capteur (24) est un capteur de température (3).

5. Agencement de mesure (18) pour mesurer au moins une propriété d'un milieu en écoulement (21), l'agencement de mesure (18) comprenant au moins :
- un tube (20) à travers lequel le milieu (21) peut s'écouler, et
- une unité de mesure (19) qui est au moins partiellement insérée dans le tube (20) et qui est configurée selon l'une quelconque des revendications précédentes.

6. Agencement de mesure (18) selon la revendication 5, dans lequel l'unité de mesure (19) est réalisée selon l'une quelconque des revendications 2 ou 3, et dans lequel au moins la section tubulaire (26) de l'unité de mesure (19) est insérée dans le tube (20).

7. Procédé de fabrication d'une unité de mesure (19) pour mesurer au moins une propriété d'un milieu en écoulement (21), l'unité de mesure (19) présentant au moins un capteur (24), le capteur (24) étant agencé à l'intérieur de l'unité de mesure (19), le capteur (24) étant relié à une paroi intérieure (25) de l'unité de mesure (19) par l'intermédiaire d'une pluralité de nanofils (2), **caractérisé en ce que** le procédé comprend au moins les étapes de procédé suivantes :
a) la fourniture d'une pluralité de nanofils (2) dans au moins une zone de la paroi intérieure (25) de l'unité de mesure (19),
b) la liaison du capteur (24) à la paroi intérieure (25) de l'unité de mesure (19) par l'intermédiaire de la pluralité de nanofils (2).

8. Procédé selon la revendication 7, dans lequel, dans l'étape a), une pluralité de nanofils (2) sont en outre fournis sur une surface du capteur (24).

9. Procédé selon l'une quelconque des revendications 7 ou 8, dans lequel l'étape b) comprend au moins les étapes de procédé partielles suivantes :
b1) l'application d'un film (5) sur la paroi intérieure (25) de l'unité de mesure (19), le film (5) présentant une pluralité de pores traversants (8) dans lesquels les nanofils (2) peuvent être amenés à croître,
b2) l'application d'un moyen pour fournir un électrolyte (6) sur le film (5), et
b3) la croissance galvanique de la pluralité de nanofils (2) à partir de l'électrolyte.

10. Procédé selon la revendication 9, dans lequel le procédé se déroule au moins partiellement sous chauffage.

11. Procédé selon l'une quelconque des revendications 9 ou 10, dans lequel l'électrolyte est amené au moyen de fourniture de l'électrolyte (6) à la demande.

12. Procédé selon l'une quelconque des revendications 9 à 11, dans lequel le moyen de fourniture de l'électrolyte (6) est pressé au moins temporairement contre le film (5).

13. Procédé selon l'une quelconque des revendications 9 à 12, dans lequel le moyen de fourniture de l'électrolyte (6) est réalisé sous forme d'éponge.

14. Procédé selon l'une quelconque des revendications 9 à 13, dans lequel les pores traversants (8) du film sont réalisés perpendiculairement à la paroi intérieure (25) de l'unité de mesure (19).

15. Procédé selon l'une quelconque des revendications 9 à 14, dans lequel pour la croissance galvanique de la pluralité de nanofils (2), une tension est appliquée entre la paroi intérieure (25) de l'unité de mesure (19) à recouvrir et une électrode (12) en appui sur le moyen de fourniture de l'électrolyte (6).

16. Procédé selon l'une quelconque des revendications 9 à 15, dans lequel le film (5) est au moins partiellement dissous.

17. Procédé selon l'une quelconque des revendications 9 à 16, dans lequel les nanofils sont soumis à au moins un traitement supplémentaire.

18. Procédé selon la revendication 17, dans lequel l'au moins un traitement supplémentaire comprend une élimination au moins partielle d'une couche d'oxyde sur les nanofils.
